# EUROPÄISCHE PATENTSCHRIFT

(11) **EP 2 718 983 B1**
(45) Veröffentlichungstag und Bekanntmachung des Hinweises auf die Patenterteilung: **25.03.2020**
(21) Anmeldenummer: 12729408.0
(22) Anmeldetag: 06.06.2012
(51) Int. Cl.: H02S 40/34

(54) **PHOTOVOLTAIK-PANELDOSE MIT OPTIMIERTEM WÄRMEHAUSHALT**
PHOTOVOLTAIC JUNCTION BOX WITH OPTIMISED HEAT BALANCE
BOÎTIER DE PANNEAU PHOTOVOLTAÏQUE À GESTION THERMIQUE OPTIMISÉE

(30) Priorität: 08.06.2011 DE 102011106325
(43) Veröffentlichungstag der Anmeldung: 16.04.2014
(73) Patentinhaber: Hirschmann Automotive GmbH, 6830 Rankweil-Brederis (AT)
(72) Erfinder: DÜNSER, Simon, 6700 Bludenz (AT); WEISS, Marco, 6832 Roethis (AT); SCHMID, Alexander, 6830 Rankweil (AT)
(74) Vertreter: Greif, Thomas
(86) Internationale Anmeldenummer: PCT/EP2012/060752
(87) Internationale Veröffentlichungsnummer: WO 2012/168329

(56) Entgegenhaltungen:
- WO-A2-2010/025223
- DE-A1-102005 022 226
- DE-B3-102006 027 104
- DE-U1-202008 006 117

## Beschreibung

Die Erfindung betrifft eine Photovoltaik-Paneldose, aufweisend ein Gehäuseunterteil sowie ein damit zusammenwirkendes Gehäuseoberteil, wobei zwischen dem Gehäuseunterteil und dem Gehäuseoberteil eine Dichtung vorgesehen ist sowie zumindest ein Anschlussstecker für eine Anschlussleitung und im Inneren der Photovoltaik-Paneldose ein Kontaktträger mit Kontakten vorhanden sind, gemäß den Merkmalen des Oberbegriffes des Patentanspruches 1.

Zur Ausnutzung de Sonnenenergie zwecks Umwandlung in elektrische Energie sind Solarelemente an sich bekannt. Solche Solarelemente werden in einer Vielzahl zusammengeschaltet, um ein Solarkraftwerk zu bilden, mit dem die Sonnenenergie in verwertbare elektrische Energie umgesetzt wird. Zu diesem Zweck weisen die einzelnen Solarelemente Kontakte, insbesondere Fähnchen oder Bändchen, auf, die aus der Oberfläche des Solarelementes herausragen. Da im Regelfall Gleichstrom erzeugt wird, ragen immer zwei Bändchen oder Fähnchen aus der Oberfläche des Solarelementes heraus. Dabei ist es erforderlich, mehrere Solarelemente miteinander zu verschalten, wozu Photovoltaik-Paneldosen bekannt sind, mit denen die aus der Oberfläche der Solarelemente herausragende Kontakte zu kontaktieren und über entsprechende Anschlussleitungen und über zusammenfassende Sammelleitungen die einzelnen Solarelemente parallel oder in Serie elektrisch zusammenzuschalten.

Eine solche Photovoltaik-Paneldose ist aus der EP 1 503 426 A2 bekannt. Diese Photovoltaik-Paneldose weist ein Gehäuseteil und ein Gehäuseoberteil auf, die zu einem Gesamtgehäuse, welches auf der Oberfläche des Solarelementes montiert, insbesondere aufgeklebt, wird, zusammengefügt werden. Um diese Photovoltaik-Paneldose vor äußeren Einflüssen zu schützen ist eine Dichtung vorgesehen. Damit die abgegriffenen Kontakte der Solarelemente elektrisch nach außen geführt werden können, sind Anschlussstecker und Anschlussleitungen vorhanden. Außerdem befindet sich im Inneren des Gesamtgehäuses der Photovoltaik-Paneldose ein Kontaktträger mit Kontakten, wobei damit die Kontakte des Solarelementes abgegriffen und diese mit den Anschlussleitungen kontaktiert werden.

Die EP 1 503 426 A2 zeigt zwar den grundsätzlichen Aufbau einer bekannten Photovoltaik-Paneldose. In der Praxis hat es sich jedoch herausgestellt, dass diese bekannte Paneldose hinsichtlich der Anschlussmöglichkeiten nach außen, hinsichtlich des Wärmehaushaltes, hinsichtlich der internen Kontaktierung und hinsichtlich ihrer konstruktiven Gestaltung insgesamt verbesserungswürdig ist.

Das Dokument DE 20 2008 006 117 U1 offenbart eine Photovoltaik-Paneldose, welche ein Gehäuseunterteil sowie ein damit zusammenwirkendes Gehäuseoberteil aufweist. Zwischen dem Gehäuseunterteil und dem Gehäuseoberteil ist eine Dichtung vorgesehen. Zumindest ein Anschlussstecker für eine Anschlussleitung ist vorhanden und im Inneren der Photovoltaik-Paneldose ist ein Kontaktträger mit Kontakten vorhanden, wobei die Photovoltaik-Paneldose ein Kühlblech aufweist.

Der Erfindung liegt daher die Aufgabe zugrunde, eine Photovoltaik-Paneldose bereitzustellen, die hinsichtlich ihres inneren Wärmehaushaltes verbessert ist.

Diese Aufgabe ist durch die Merkmale des Patentanspruches 1 gelöst.

Erfindungsgemäß ist vorgesehen, dass die Photovoltaik-Paneldose ein Kühlblech aufweist. Das Kühlblech kann Bestandteil des Gehäuseoberteiles und/oder des Gehäuseunterteiles sein. In bevorzugter Weise wird das Kühlblech in dem Gehäuseunterteil angeordnet, damit die im Inneren des Gehäuses der Photovoltaik-Paneldose entstehende Wärme über das Kühlblech in Richtung des Solarelementes, auf dem die Paneldose installiert ist, abgeführt werden kann. Durch das Vorhandensein des Kühlbleches wird es ermöglicht, dass sich das Innere der Photovoltaik-Paneldose, die gegenüber der Außenwelt nahezu, aber nicht vollständig hermetisch abgedichtet ist, weniger stark erwärmt. Dadurch wird der Verschleiß der beteiligten Bauelemente deutlich reduziert, sodass insgesamt die Lebensdauer der Photovoltaik-Paneldose wesentlich erhöht wird. Dies ist auch unbedingt erforderlich, da solche Paneldosen in Solarkraftwerken über mindestens zwei oder mehr Jahrzehnte ihre Funktion dauerhaft versehen sollen. Außerdem wird durch ein insgesamt abgesenktes Temperaturniveau infolge des Vorhandenseins des Kühlbleches im Inneren der Paneldose die elektrische Kontaktierung weniger beansprucht, sodass dadurch die Kontaktsicherheit über die Lebensdauer der Paneldose deutlich erhöht wird. Es kommt in vorteilhafter Weise zu weniger Kontaktkorrosionen und dergleichen, sodass die Dauerzuverlässigkeit deutlich gesteigert ist.

In Weiterbildung der Erfindung ist eine wärmeleitende Isolierfolie vorgesehen, die zumindest zwischen einem Kontakt des Kontaktträgers und dem Kühlblech angeordnet ist. Diese Isolierfolie, die einerseits wärmeleitende, andererseits aber elektrisch isolierende Eigenschaften aufweist, ermöglicht es, die Wärme, die im Bereich der elektrisch leitenden Bauteile der Paneldose, insbesondere deren Kontakte, entsteht, dem Kühlblech zuzuführen und über dieses abzuführen. Denn schon das Kühlblech alleine hat den Vorteil, dass es mit einem Kontakt des Kontaktträgers oder dem Kontakt des Solarelementes sowie mit einer Anschlussleitung verbunden ist, sodass über das Kühlblech die im Inneren der Paneldose entstehende Wärme nicht nur oder gar nicht über das Solarelement, sondern zusätzlich oder alleine über die elektrische Anschlussleitung (genauer dem inneren elektrischen Leiter) nach außen abgeführt wird. Das heißt, dass über eine der elektrisch leitfähigen Verbindungen von dem Solar element über den Kontakt des Kontaktträgers und der Anschlussleitung die Wärme nach außen abgeführt wird. Dabei ist selbstverständlich zu bedenken, dass das Kühlblech so mit den elektrisch leitfähigen Teilen verbunden wird, dass kein Kurzschluss entsteht. So kann beispielsweise bei zwei elektrisch leitfähigen Verbindungen (Plusleitung und Minusleitung) daran gedacht werden, dass jeder ein eigenes Kühlblech zugeordnet ist, über dass die im Inneren der Paneldose entstehende Wärme über seine zugehörige elektrische Anschlussleitung nach außen abgeführt wird. Da im Inneren solcher Paneldosen oftmals aus elektrischen Gründen Dioden angeordnet werden, gibt es auch mehr als zwei, genauer drei Kontakte, die genutzt werden können, um die Wärme nach außen abzuführen. In diesem Fall ist die Isolierfolie von besonderem Vorteil, da diese die an dem dritten (oder ggf. weiteren) Kontakt entstehende Wärme an das Kühlblech (oder das weitere vorhandene Kühlblech) abgibt, damit auch die dort entstehende Wärme nach außen abgeführt werden kann. Selbstverständlich ist es auch denkbar, bei einem dritten oder weiteren Kontakt auch diesem ein eigenständiges Kühlblech zuzuordnen.

Zur weiteren Verbesserung des Wärmehaushaltes der Photovoltaik-Paneldose ist vorgesehen, dass in dem Gehäuseunterteil und/oder dem Gehäuseoberteil zumindest eine Membran angeordnet ist. Mit dieser Membran wird es in vorteilhafter Weise möglich, zwischen dem Inneren der Paneldose und der äußeren Umgebung vorhandene Temperatur-, Feuchtigkeits-, Druckunterschiede und dergleichen auszugleichen. Auch durch diese Maßnahme werden die beteiligten Bauelemente wesentlich weniger beansprucht, sodass ebenfalls durch diese Maßnahme die Lebensdauer der Paneldose deutlich erhöht wird.

Es ist üblich, solche Paneldosen, nachdem sie auf den Solarelementen angeordnet worden sind, in gegebenen Zeitabständen zu reinigen. Hierzu werden sie beispielsweise mit einem Dampfstrahler abgestrahlt, um Verunreinigungen zum Beispiel durch Staub, Grasreste, Vogelkot und dergleichen zu beseitigen. Da die Membran an sich ein empfindliches Bauteil ist, das durch solche Reinigungsmaßnahmen oder auch durch Verschmutzung beschädigt werden könnte, ist in Weiterbildung der Erfindung vorgesehen, dass über der Membran nach außen hin eine Abdeckung angeordnet ist. Diese Abdeckung ermöglicht einerseits den Schutz der Membran vor äußeren Einflüssen, ist aber gleichzeitig so gestaltet, dass die Funktion der Membran dadurch nicht beeinträchtigt wird. Das bedeutet beispielsweise, dass sich zwischen der Oberfläche der Membran und der darüberliegenden Abdeckung ein ausreichend kleiner Spalt befindet.

In Weiterbildung der Erfindung ist vorgesehen, dass das Gehäuseunterteil und/oder das Gehäuseoberteil um den Bereich der Membran herum eine Abschrägung aufweist. Dabei ist diese Abschrägung im Inneren und/oder Äußeren des jeweiligen Gehäuseteiles vorhanden und bewirkt in vorteilhafter Weise, dass vorhandenes Wasser (zum Beispiel bei der Reinigung der Paneldose von außen, Regenwasser oder dergleichen) bzw. im Inneren der Paneldose sich bildendes Wasser (zum Beispiel Schwitzwasser) nicht in den Bereich der Membran gelangen kann, sondern durch die Abschrägung von der Membran weggeführt wird. Dabei ist die Abschrägung in Abhängigkeit der Montageausrichtung der Paneldose so gewählt, dass die Abschrägung von der Membran wegführt, das heißt, dass entstandenes oder vorhandenes Wasser, Feuchtigkeit oder dergleichen von der Membran weggeführt wird.

Im Folgenden wird die Erfindung anhand der Figuren näher erläutert und beschrieben.

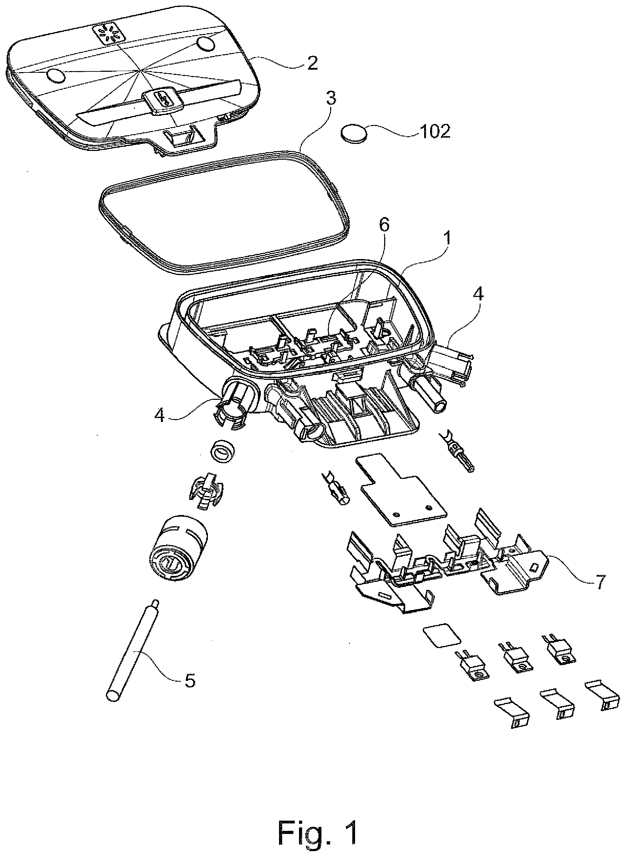

Die Figur 1 zeigt, soweit im Einzelnen dargestellt, die wesentlichen Bauteile einer erfindungsgemäßen Photovoltaik-Paneldose. Ein Gehäuse der Paneldose wird gebildet von einem Gehäuseunterteil 1 und einem Gehäuseoberteil 2 (auch als Deckel zu bezeichnen), wobei zwischen dem Gehäuseunterteil 1 und dem Gehäuseoberteil 2 eine Dichtung 3 (umlaufend) vorgesehen ist. Weiterhin weist die Paneldose, hier insbesondere das Gehäuseunterteil 1, Anschlussstecker 4 (hier zwei Anschlussstecker 4 für die Plus- und die Minusleitung) auf, wobei die Anschlussstecker 4 mit Anschlussleitungen 5 versehen werden. Die Anschlussleitungen 5 führen zu Verbindungspunkten, sodass damit mehrere Paneldosen zusammengeschaltet werden können. Weiterhin ist im Inneren des Gehäuses der Paneldose ein Kontaktträger 6 mit hier nicht näher dargestellten Kontakten vorhanden, wobei der Kontaktträger 6 vorzugsweise von dem Gehäuseunterteil 1 gebildet (einstückige Variante) oder als separates Bauteil an dem Gehäuseunterteil 1 befestigt ist (zweistückige Variante). Der elektrisch isolierende Kontaktträger 6 wird noch in Verbindung gebracht mit einem aus einem elektrische leitfähigen Material bestehenden Stanzgitter 7, das entweder die Kontakte bilden kann oder zur Aufnahme von weiteren Kontakten, wie im Folgenden noch beschrieben wird, dienen kann.

Das Gehäuseunterteil 1 und das Gehäuseoberteil 2 sind in vorteilhafter Weise aus einem langzeitwitterungsstabilem Kunststoff hergestellt, wobei es sich anbietet, diese beiden Teile in einem Kunststoffspritzgussverfahren aus gleichem oder unterschiedlichem Material herzustellen.

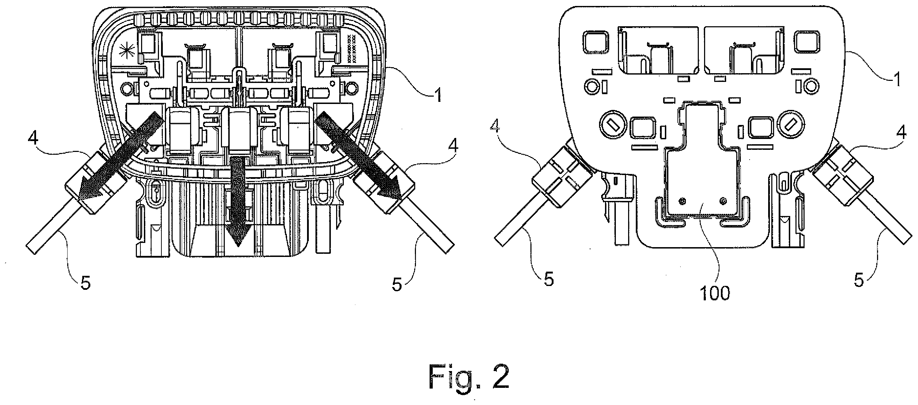

In Figur 2 ist die Ansicht des Gehäuseunterteiles einmal von oben und einmal von unten erkennbar, wobei in dem Gehäuseunterteil 1 auf seiner Unterseite (rechte Darstellung) ein Kühlblech 100 eingesetzt ist. Hierzu weist das Gehäuseunterteil 1 eine Aussparung auf, in die das Kühlblech 100 zum Beispiel rastend, geklebt, verstemmt oder dergleichen eingesetzt wird. Es ist auch denkbar, dass das Kühlblech 100 schon mit Herstellung des Gehäuseunterteiles 1 im Kunststoffspritzgussverfahren eingespritzt wird.

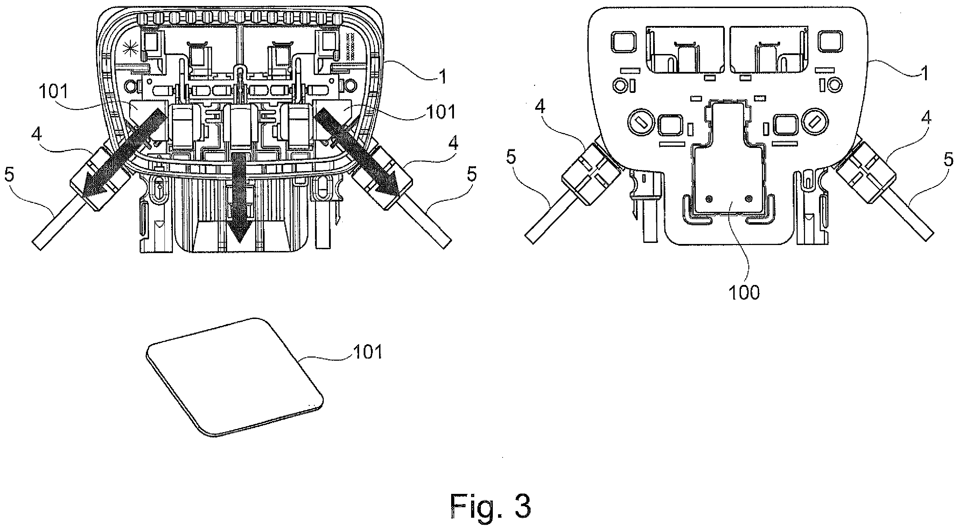

In Figur 3 ist eine Isolierfolie 101 gezeigt, wobei diese Isolierfolie zwischen dem elektrischen Leiter der Anschlussleitung 5 und einem zugehörigen Kontakt des Kontaktträgers 6 (bzw. des Stanzgitters 7) angeordnet ist. Diese Isolierfolie 101 mit wärmeleitenden und gleichzeitig elektrisch isolierenden Eigenschaften wird es ermöglicht, die im Inneren des Gehäuses der Paneldose entstehende Wärme über den elektrischen Leiter der Anschlussleitung 5 in vorteilhafter Weise nach außen hin abzuführen. Insgesamt bietet die zumindest eine Isolierfolie 101 den grundsätzlichen Vorteil, elektrisch leitende Bereiche im Inneren der Paneldose wärmeleitend, gleichzeitig aber elektrisch isolierend mit dem einen elektrischen Leiter der zumindest einen Anschlussleitung 5 zu verbinden, um die Wärme im Inneren nach außen abzuleiten. Alternativ oder ergänzend kann die Isolierfolie 101 selbstverständlich auch mit dem zumindest einen Kühlblech 1001 verbunden sein.

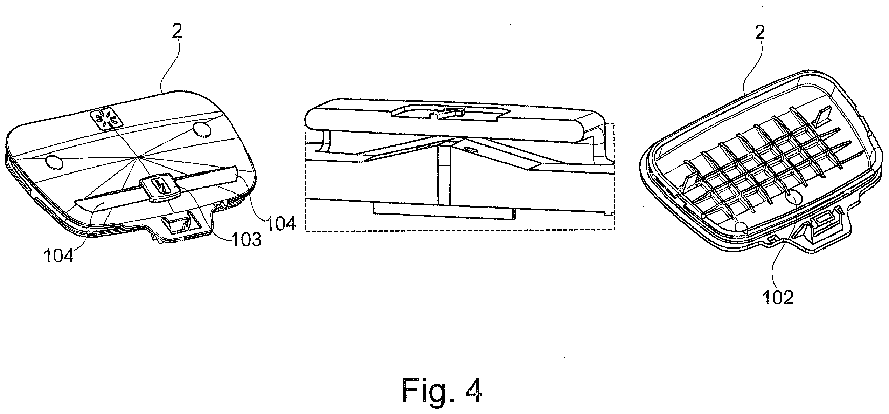

Figur 4 zeigt in diesem Fall das Gehäuseoberteil 2, in dem eine Membran 102 angeordnet ist. Die Membran 102 ist einmal vorhanden, kann aber auch mehrfach vorhanden sein. Daneben kann die zumindest eine Membran 102 nicht nur im Gehäuseoberteil 2, sondern auch im Gehäuseunterteil 1 einfach oder mehrfach vorhanden sein. Dazu werden in geeigneter Anzahl entsprechende Öffnungen bei der Herstellung oder nach der Herstellung der beiden Teile 1, 2 vorgesehen. Außerdem ist eine Abdeckung 103 erkennbar, die über der Membran 102 nach außen hin angeordnet ist. Mit der Abdeckung 103 wird wirksam vermieden, dass die Membran 102 durch äußere Einflüsse (zum Beispiel Regenwasser, Verschmutzungen, Dampfstrahlen und dergleichen) beschädigt wird. Zur Steigerung der Lebensdauer der Membran 102 ist noch eine Abschrägung 104 vorgesehen, die bewirkt, dass sich im Bereich der Membran 102, insbesondere unter der Abdeckung 103, Wasser, Schmutz oder dergleichen anstaut, welches die Lebensdauer und die Funktionstüchtigkeit der Membran 102 beeinträchtigen könnte.

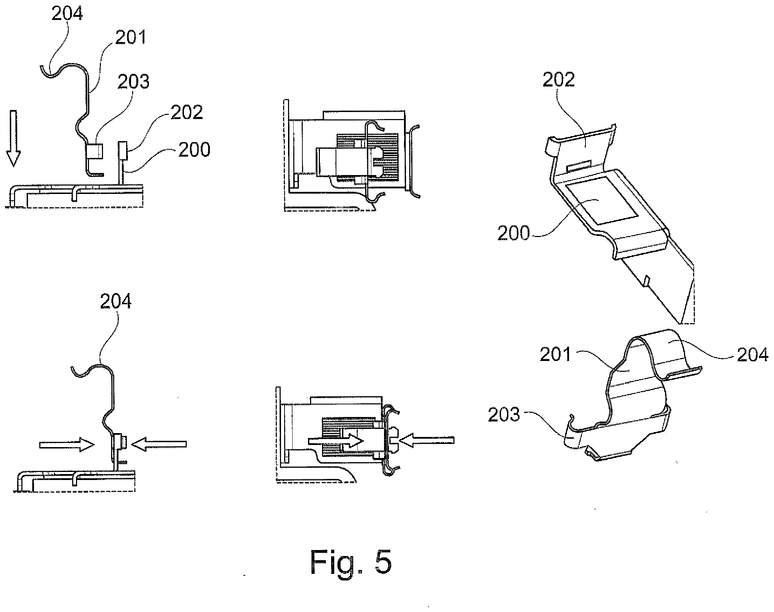

In Figur 5 ist dargestellt, dass an einem Kontakt 200 der Paneldose ein Spannelement 201 anbringbar ist, wobei das Spannelement 201 von einer Vorposition in eine Verrastposition bringbar ist. In der unteren, linken Darstellung ist erkennbar, dass der Kontakt 200 und das Spannelement 201 voneinander separate Teile sind. Diese beiden Teile weisen Anlagebereiche 202, 203 auf, die einander korrespondierend so gestaltet sind, dass sie zueinander passen und es gestatten, dass das Spannelement 201 in einer Vorposition an dem Kontakt 200 gehalten wird (siehe die beiden mittleren, unteren Darstellungen der Figur 5) wobei dann, wenn das Spannelement 201 an dem Kontakt 200 in Anlage gebracht wurde (Gegenhalten) das Spannelement 201 durch eine Bewegung, insbesondere eine Bewegung um etwa 90 Grad in seine Verrastposition gedrückt werden kann (siehe rechte, untere Darstellung). Dadurch wird es ermöglicht, dass der Kontakt, insbesondere der flächige Kontakt in Form eines Bändchens oder dergleichen, des Solarelementes zwischen dem Kontakt 200 und dem Spannelement 201 eingeklemmt wird. Um das Spannelement 201 an dem Kontakt 200 festzulegen, weist es vorzugsweise endseitig einen Rastklemmbereich 204 auf. In der oberen Darstellung der Figur 5 sind die einander korrespondierenden Anlagebereiche 202, 203 noch einmal sehr gut erkennbar. Dabei wird deutlich, dass der Kontakt 200 im Bereich seines Anlagebereiches 202 eine Ausnehmung aufweist, mit der ein abgewinkelter Endbereich des Spannelementes 201, ausgehend von dem Anlagebereich 203, in diese Ausnehmung eingreifen kann. Damit bildet dieser abgewinkelte Endbereich des Spannelementes 201 zusammen mit der Ausnehmung im Anlagebereich 202 des Kontaktes 200 ein Gelenk.

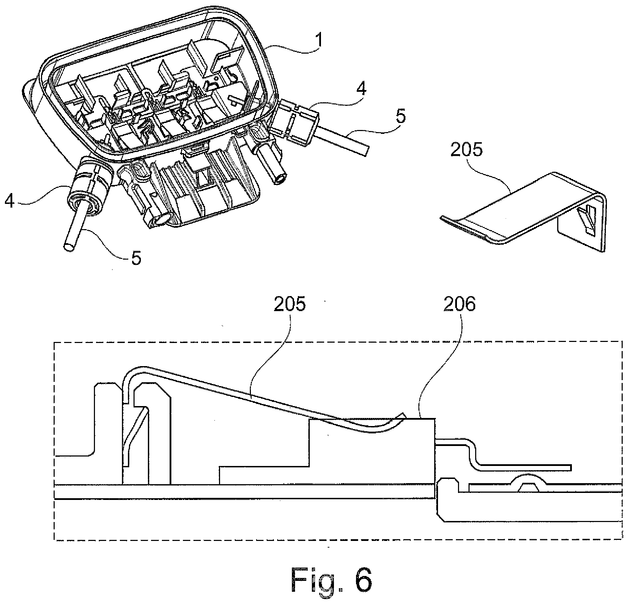

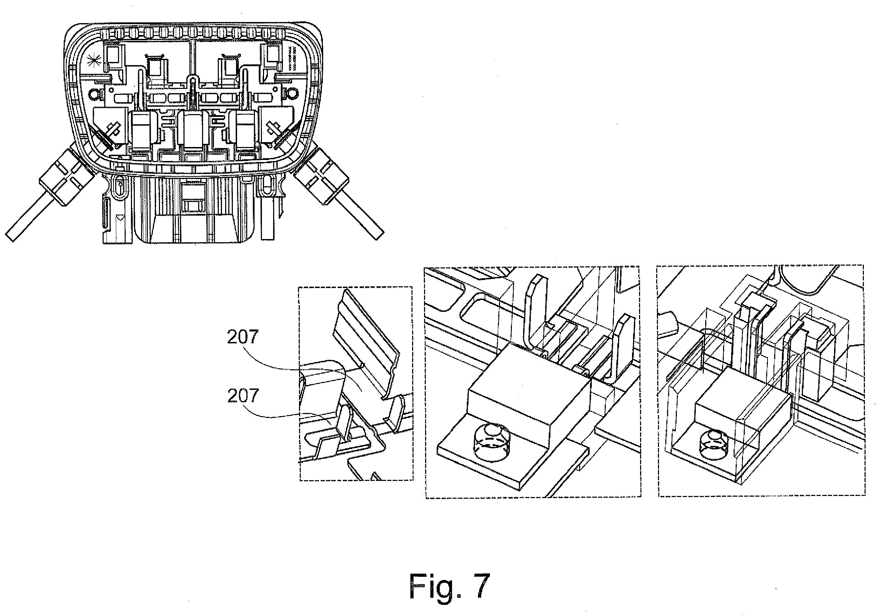

In den Figuren 6 und 7 ist ein weiteres Spannelement 205 zur Befestigung einer Diode an dem Stanzgitter 7 dargestellt. Das Spannelement 205 gemäß Figur 6 ist etwa L-förmig gestaltet, mit einem längeren und einem kürzeren Schenkel. An dem kürzeren Schenkel ist ein Rasthaken abstehend angeordnet, der korrespondierende Rastmittel (insbesondere eine Ausnehmung oder einen Absatz) an dem Stanzgitter 7 hintergreift. Damit kann das Spannelement 205 an dem Stanzgitter festgelegt werden und drückt dabei auf das Außengehäuse einer Diode 206. Dadurch wird mit dem Spannelement 205 die Diode 206 in ihrer Lage innerhalb der Paneldose fixiert. Sind die Beinchen der Diode 206 lösbar mit dem Stanzgitter 7 kontaktiert, kann in einfacher Weise das Spannelement 205 entfernt werden, um eine defekte Diode 206 auszutauschen. Dazu wird das Spannelement 205 von dem Stanzgitter 7 gelöst, die Diode 206 ausgetauscht und die neue Diode ebenfalls mittels des Spannelementes 205 wieder mechanisch in ihrer Lage fixiert. Dabei kann die elektrische Kontaktierung der Beinchen den Diode 206 ebenfalls indirekt über das Spannelement 205 bewirkt werden, da dieses auf das Gehäuse der Diode 206 drückt, wobei diese Kraft auf den Kontaktbereich der Beinchen der Diode 206 mit dem Stanzgitter 7 übertragen wird. War jedoch die defekte Diode mit dem zugehörigen Kontaktbereich des Stanzgitters 7 festgelötet, bietet das Spannelement 205 trotzdem eine Reparaturlösung. Denn es ist möglich, die Beinchen den defekten Diode 206 von dem Stanzgitter 7 zu lösen (abzuknipsen), wobei schon vorher das Spannelement 205 vorhanden gewesen sein kann oder nicht. Wurde die Diode ausgewechselt, so sind in vorteilhafter Weise an dem Stanzgitter weitere Kontakte 207 (Figur 7) vorhanden, die mit den Beinchen der neuen ausgewechselten Diode 206 kontaktiert werden. Da in diesem Fall keine unlösbare Verbindung (zum Beispiel durch Verlöten) vorgesehen ist, wird das entweder schon vorhandene Spannelement 205 erneut oder ein neues Spannelement 205 verwendet, welches die ausgewechselte Diode 206 sowohl in ihrer Lage mechanisch fixiert als auch indirekt die Kontaktierung der Beinchen der neuen Diode 206 auf die Kontakte 207 des Stanzgitters 7 bewirkt.

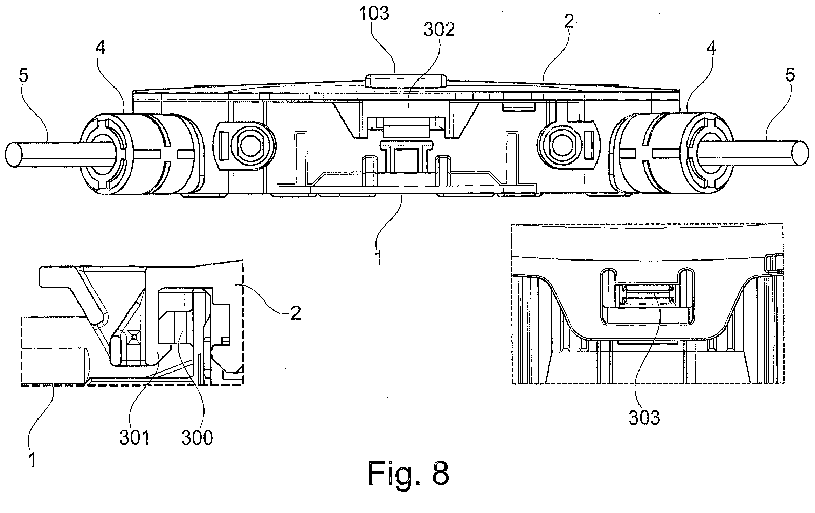

In Figur 8 ist gezeigt, dass das Gehäuseunterteil 1 mit dem Gehäuseoberteil 2 über Rastmittel miteinander verbunden ist. Dabei sind die Rastmittel mindestens einmal, vorzugsweise mehrfach, vorhanden und in bevorzugter Form als Vorsprung 300 und damit zusammenwirkendem Rasthaken 301 ausgebildet. In dem Ausführungsbeispiel gemäß Figur 8 ist der Vorsprung 300 an dem Gehäuseunterteil 1 und der Rasthaken 301 an dem Gehäuseoberteil 2 angeordnet. Eine umgekehrte Anordnung ist ebenfalls denkbar. Weiterhin ist im Bereich der Rastmittel eine Überdeckung 302 zwecks Schutz der dahinter liegenden Rastmittel vorgesehen. Ebenfalls weiterhin ist im Bereich der Rastmittel eine Sollbruchstelle 303 vorgesehen. Die Rastmittel, insbesondere der Rasthaken 301, ist somit mittels der Überdeckung 302 von allen Seiten geschützt und kann nur von einer Seite, vorzugsweise nur von oben, mit Hilfe eines Werkzeuges betätigt werden, sodass das Gehäuse der Paneldose geöffnet werden kann. In diesem Bereich ist auch die Sollbruchstelle 303 angeordnet, die einen Manipulationsschutz bietet. Die Sollbruchstelle 303 muss nicht im Bereich der Rastmittel, sondern kann auch in einem anderen Bereich angeordnet werden, sodass mit Hilfe der Sollbruchstelle erkennbar wird, dass versucht wurde, das Gehäuseoberteil von dem Gehäuseunterteil zu lösen.

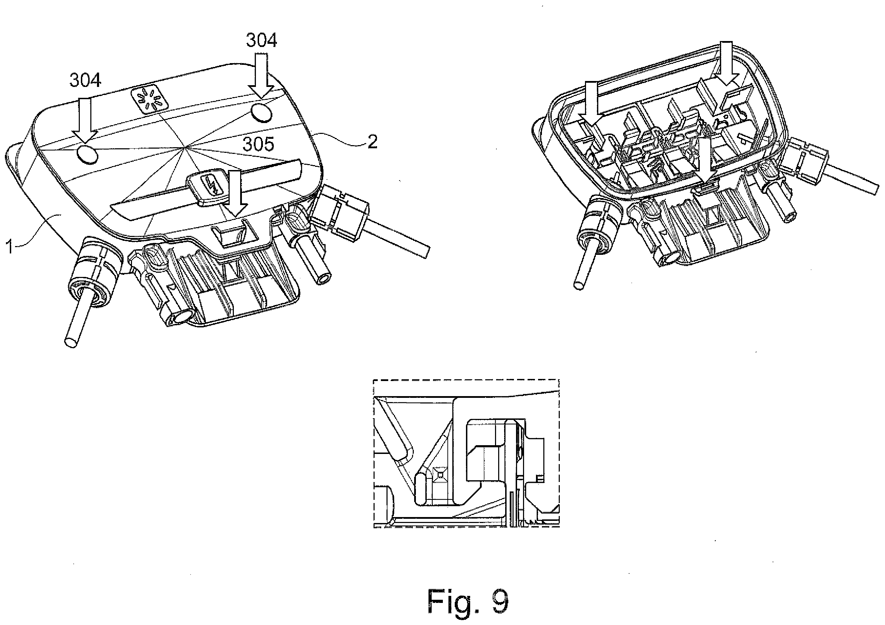

In Figur 9 ist gezeigt, dass die Rastmittel mindestens doppelt vorgesehen sind, wobei die einen Rastmittel 304 im Inneren der Pendeldose und die anderen Rastmittel 305 außerhalb der Pendeldose angeordnet sind. Bei diesem Ausführungsbeispiel erfolgt die Verrastung des Gehäuseoberteiles 2 mit dem Gehäuseunterteil 1 durch drei Rastmittel, wobei sich zwei Rastmittel im Inneres des Gehäuses und ein Rastmittel außerhalb des Gehäuses befinden. Damit braucht nur das eine Rastmittel 305 betätigt zu werden, um das Gehäuse der Pendeldose zu öffnen, wohingegen aufgrund der gegenüberliegenden Anordnung der beiden innen liegenden Rastmittel 304 eine Art Gelenk realisiert ist, das es ermöglicht, das Gehäuseoberteil 2 relativ zu dem Gehäuseunterteil 1 aufzuklappen.

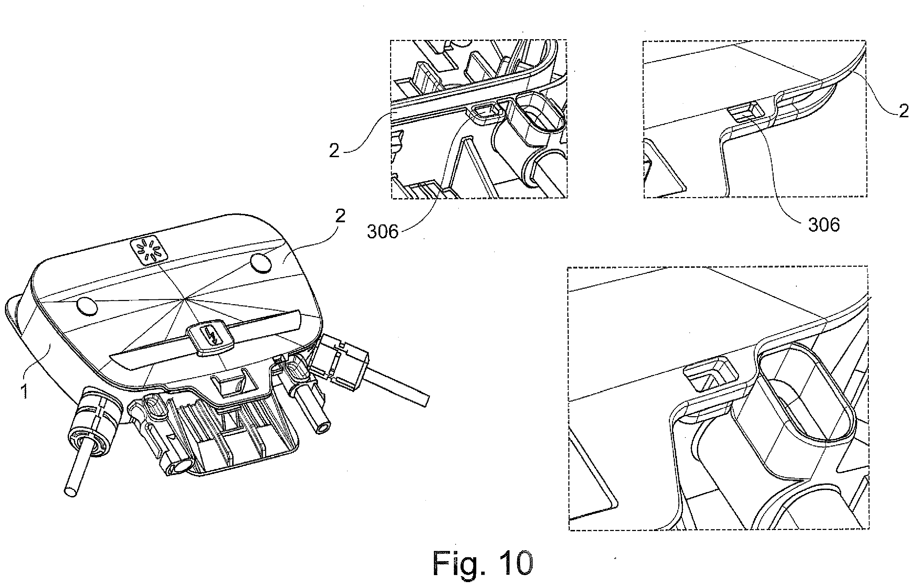

In Figur 10 ist gezeigt, dass das Gehäuseoberteil 2 verliersicher an dem Gehäuseunterteil angeordnet ist. Zu diesem Zweck weist das Gehäuseoberteil 2 eine Aussparung 306 auf. Während hier das Gehäuseunterteil 1 keine Aussparung aufweist, kann eine Gestaltung denkbar sein, bei der auch das Gehäuseunterteil 1 eine solche Aussparung aufweist oder nur das Gehäuseunterteil 1 die Aussparung 306 aufweist und nicht das Gehäuseoberteil 2. Weist eines oder weisen beide Teile 1, 2 die Aussparung 306 auf, kann durch diese ein Verbindungselement, vorzugsweise ein Kabelbinder, durchgeführt und mit der korrespondierenden anderen Aussparung oder einem anderen Teil des Gehäuses der Pendeldose in Verbindung gebracht werden. Dadurch werden die beiden Teile 1, 2 verliersicher, jedoch noch relativ zueinander bewegbar, angeordnet.

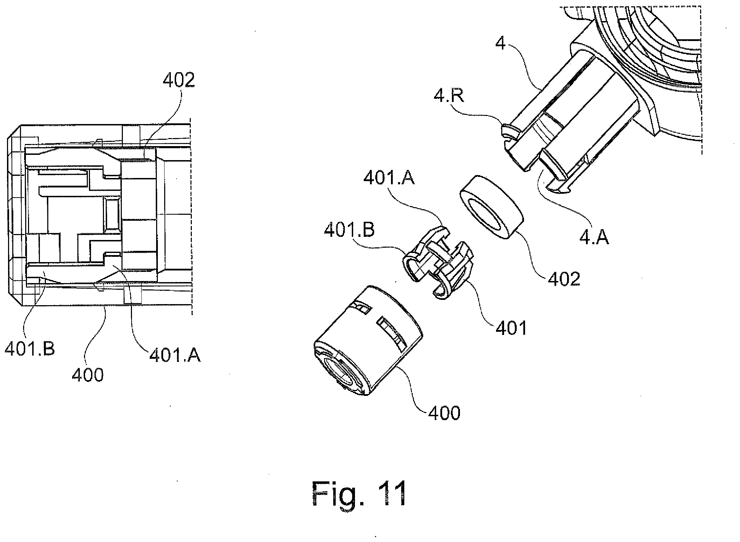

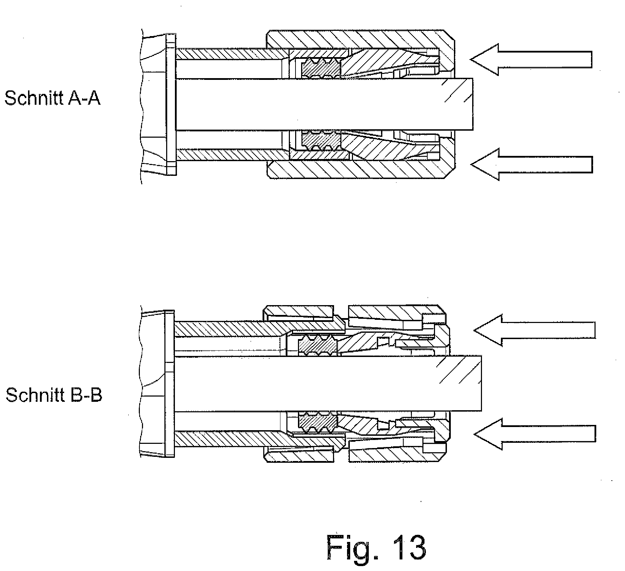

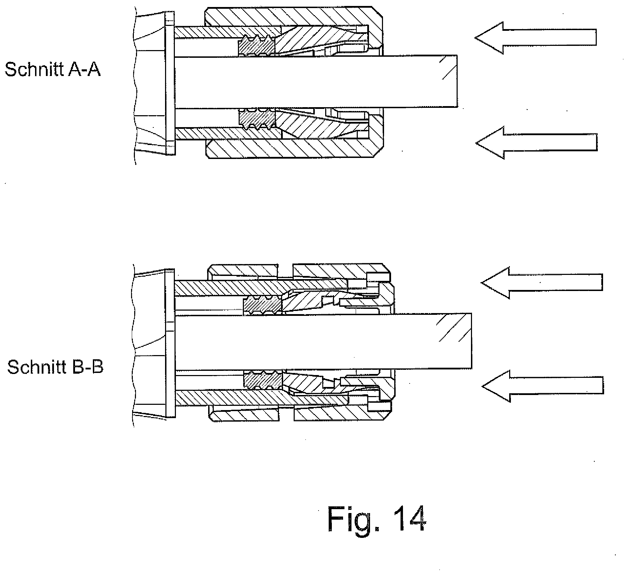

In den Figuren 11 bis 15 sind die für die Zugentlastung erforderlichen Mittel sowie deren Funktionalität gezeigt und im Folgenden beschrieben.

Figur 11 zeigt eine auf die Anschlussleitung 5 aufschiebbare und dort längs verschiebbare Hülse 400, wobei der Hülse 400 ein Klemmelement 401, das ebenfalls längs bewegbar auf der Anschlussleitung 5 aufgeschoben wird, zugeordnet ist. Zur Erzielung der Längswasserdichtheit ist noch eine Dichtung 402, beispielsweise ein O-Ring, vorgesehen.

Das Klemmelement 401 weist in Richtung des Anschlusssteckers 4 abstehende Arme 401.A auf und greift in korrespondierende Aussparungen 4.A des Anschlusssteckers 4 dann ein, wenn es in seine Endposition gebracht wurde. Weiterhin weist das Klemmelement 401 in Richtung der abgehenden Anschlussleitung 5 abstehende Arme 401.B auf, wobei die Arme 401.B auf die Anschlussleitung 5 drücken, wenn sich die Hülse 400 in ihrer Endposition befindet. Die Gestaltung der Hülse 400, des Klemmelementes 401 und des Anschlusssteckers 4 erlaubt es, dass dann, wenn das Kabel in Richtung des Inneren des Gehäuses der Paneldose hereingeführt und in seiner Lage vorfixiert wurde, eine schnelle und einfache, dennoch wirksame Realisierung der Zugentlastung.

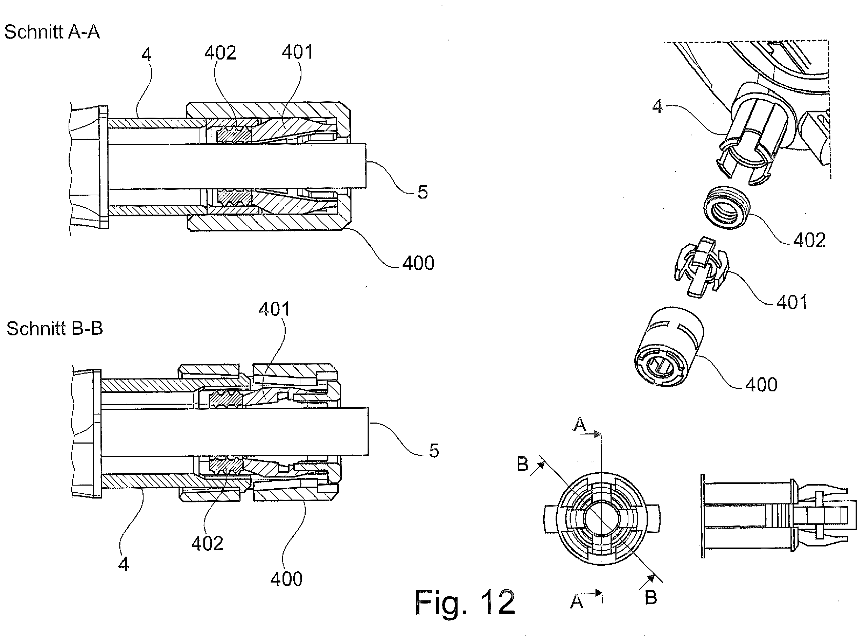

In den Figuren 12 bis 15 ist das Zusammenspiel zwischen Anschlussstecker 4, Klemmelement 401 und Hülse 400 in verschiedenen Positionen zueinander mit den jeweiligen Funktionsweisen beschrieben.

In Figur 12 befinden sich die Hülse 400 und das Klemmelement 401 in einer Vorverrasstposition auf der Anschlussleitung 5. Dabei umschließt die zylinderförmig gestaltete Hülse 400 das Klemmelement 401, optional die Dichtung 201, wobei die Hülse 400 mit seinem der Paneldose zugewandtem Ende (umlaufendem Bund) schon mit dem Anschlussstecker 4 in Verbindung gebracht worden ist. Dadurch ist jetzt schon die Hülse 400 auch zusammen mit den anderen beteiligten Elementen verliersicher an dem Anschlussstecker 4 festgelegt.

Ausgehend von der in Figur 12 gezeigten Position der Hülse 400, wird diese gemäß Figur 13 jetzt in Richtung des Anschlusssteckers 4 längs auf der Anschlussleitung 5 bewegt, sodass dadurch die Hülse 400 das Klemmelement 401 ebenfalls in Richtung des Anschlusssteckers 4 bewegt. Ist die Dichtung 402 vorhanden, wird auch diese in ihren Dichtungssitz, der sich in dem Anschlussstecker 4 befindet, verschoben. Diese Längsverschiebung der Hülse 400 bis in Richtung des Anschlusssteckers 4 erfolg so lange, bis das vordere Ende des Klemmelementes den zugehörigen Anlagebereich des Anschlusssteckers 4 erreicht. Dies ist insbesondere dann der Fall, wenn die Arme 401.A des Klemmelementes 401 vollständig in den korrespondierenden Aussparungen 4.A des Anschlusssteckers 4 zur Anlage gekommen sind. Diese Bewegungsabfolge ist in Figur 14 dargestellt.

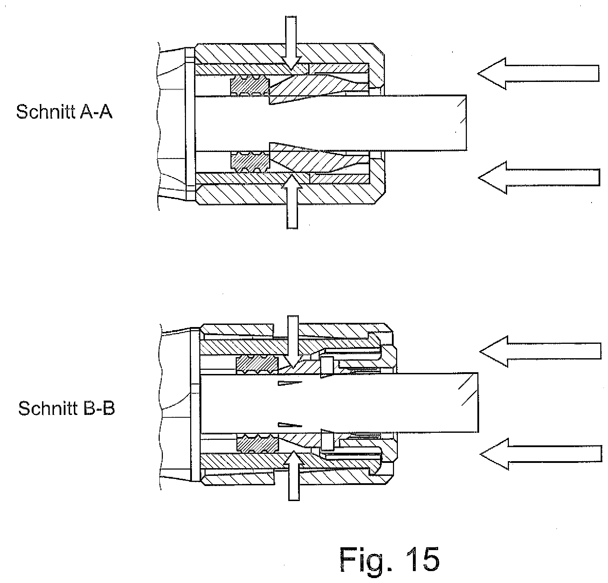

In Figur 15 ist die Endposition der beteiligten Bauelemente für die Zugentlastung dargestellt. Hier ist erkennbar, dass die Hülse 400 an einem entsprechenden Anlagebereich des Anschlusssteckers 4 zur Anlage gekommen ist, sodass diese sich in ihrer Endposition befindet. Gleichzeitig befinden sich auch das Klemmelement 401 und, falls vorhanden, die Dichtung 402 in ihrer Endposition. Dabei bewirkt das Klemmelement 401 aufgrund seiner Gestaltung, dass die abstehenden Arme 401. A auf den äußeren Mantel des elektrischen Leiters der Anschlussleitung drücken und damit wirksam die Zugentlastung realisieren. Aufgrund der Verrastung der beteiligten Elemente miteinander wird diese in Figur 15 gezeigte Endverrastpositon dauerhaft festgefegt. Zur Verrastung der Hülse 400 an dem Anschlussstecker 4 weist die Hülse 400 entsprechende Rastmittel auf, die mit Rastmitteln 4.R des Anschlusssteckers 4 korrespondieren (siehe Figur 11).

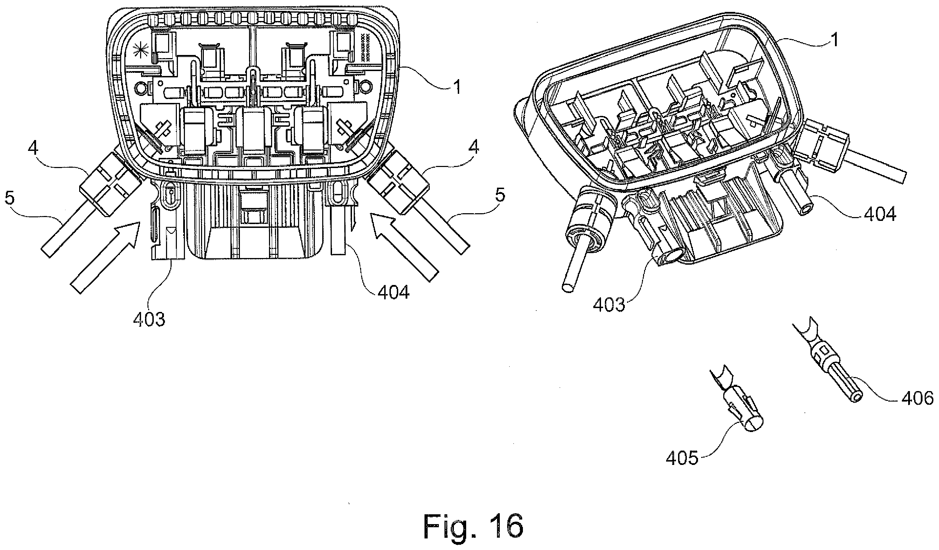

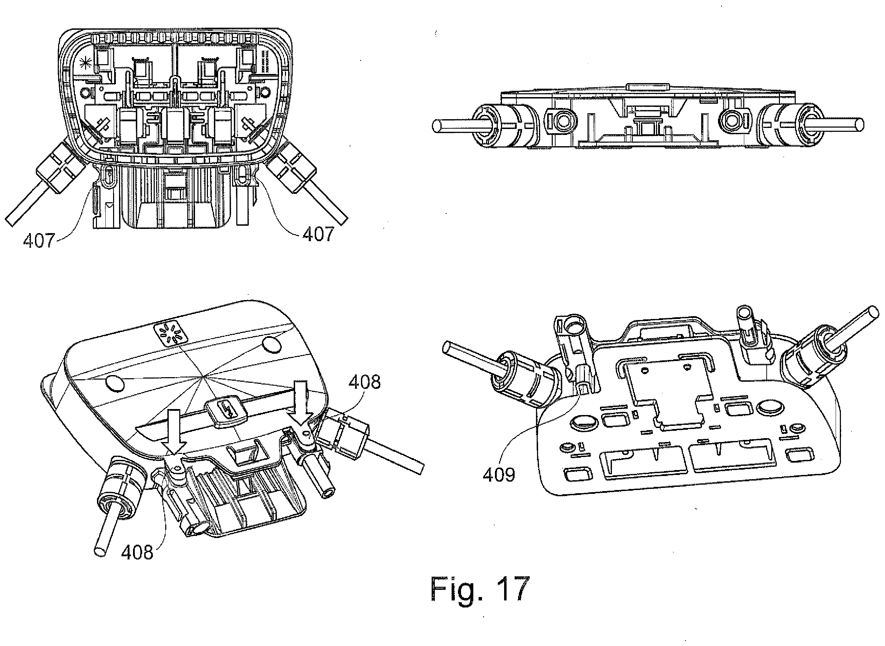

In den Figuren 16 und 17 ist gezeigt, dass die Paneldose zusätzlich zu den zwei Anschlusssteckern 4 zusätzliche Anschlussstecker 403, 404 aufweist. Diese zusätzlichen Anschlussstecker 403, 404 sind bei dem gezeigten Ausführungsbeispiel unterschiedlich gestaltet, können alternativ aber auch gleichartig ausgebildet sein. Diese zusätzlichen Anschlussstecker sind in vorteilhafter Weise deshalb unterschiedlich voneinander gestaltet, weil an dem nicht dargestellten abgehenden Ende der Anschlussleitungen 5 mit den Anschlusssteckern 403, 404 unterschiedlich gestaltete, jedoch korrespondierende Anschlussstecker (Steckverbinder) angeordnet sind. Denn die zusätzlichen Anschlussstecker 403, 404 haben in vorteilhafter Weise zunächst keine elektrische Funktion, sondern nehmen lediglich die endseitig angeordneten Steckverbinder an den Anschlussleitungen 5 vor der Montage der Paneldose auf dem Solarelement auf. Ergänzend dazu können in den zusätzlichen Anschlusssteckern 403, 404 aber auch zusätzliche Kontakte 405, 406 angeordnet sein. Über diese zusätzlichen Kontakte 405, 406 ist es möglich, entweder eine elektrische Funktionsprüfung der Paneldose durchzuführen oder zusätzlich zu Anschlusssteckern 4 zur Erhöhung der Leistungsübertragung auch darüber Energie zu Übertragen oder andere Dinge damit zu realisieren (wie zum Beispiel eine Datenübertragung, wenn eine "Intelligenz" in der Paneldose untergebracht ist).

In Figur 17 schließlich ist gezeigt, dass die zusätzlichen Anschlussstecker 403, 404 eine Prüföffnung 407 aufweisen. Diese Prüföffnung 407 kann nur bei einem der beiden zusätzlichen Anschlussstecker 403, 404 oder, wie gezeigt, bei beiden vorhanden sein. Über die Prüföffnung 407 wird ein Prüfkontakt zugänglich, wobei der Prüfkontakt der Kontakt 405, 406 oder alternativ dazu ein andere Kontakt sein kann. Damit ist es möglich, die elektrische Funktionalität der Paneldose von außen zu prüfen, auch wenn diese schon auf dem Solarelement angeordnet und verschaltet ist. Denn dadurch entfällt in vorteilhafter Weise das Ausstecken der schon verkabelten Paneldose. Um die elektrische Sicherheit zu gewährleisten, ist in vorteilhafter Weise die jeweilige Prüföffnung 407 von einer Abdeckung verschleißbar. In Figur 17 ist gezeigt, dass die Abdeckung 408 von einem Bestandteil des Gehäuseoberteiles 2 gebildet ist. Das bedeutet in vorteilhafter Weise, dass die Funktionalität der Paneldose, nachdem sie mit ihren Anschlussleitungen 5 verschaltet worden ist, über die Prüföffnungen 407 und die darin befindlichen Prüfkontakte überprüft werden kann, wobei in diesem Fall das Gehäuseoberteil 2 noch nicht montiert wurde. Stellt sich nämlich heraus, dass ein Fehler vorliegt, ist das Innere der Paneldose noch zugänglich. Stellt sich jedoch heraus, dass die Paneldose elektrisch einwandfrei funktioniert, kann das Gehäuseoberteil 2 montiert werden, wobei gleichzeitig die Abdeckung 408, die Bestandteil des Gehäuseoberteiles 2, die Prüföffnung 407 verschließt. Alternativ dazu kann auch die Abdeckung 408 ein eigenständiges Bauteil sein. Während bisher davon ausgegangen worden ist, dass die Prüföffnung 407 von oben in Richtung des Solarelementes zugänglich ist, kann es auch sein, dass die Prüföffnung 409 von unten, das heißt von der Unterseite des Gehäuseunterteiles 1, mit dem die Paneldose auf dem Solarelement flächig angeordnet wird, zugänglich ist. Ist die Prüföffnung 409 nach unten offen, muss die Prüfung auf Funktionalität vor der Festlegung der Paneldose auf dem Solarelement erfolgen. Stellt sich heraus, dass die Paneldose einwandfrei arbeitet, kann sich auf dem Solarelement angeordnet und befestigt (zum Beispiel aufgeklebt) werden, sodass damit automatisch die bis dahin noch nach unten offene Prüföffnung 409 verschlossen wird.

Zur allgemeinen Erläuterung: Ein Solarmodul oder Photovoltaikmodul wandelt das Licht der Sonne direkt in elektrische Energie um. Das Modul besteht aus einer Vielzahl von Solarzellen, die in Serie oder parallel geschaltet sind. Solarmodule sind als flexible und starre Ausführung verfügbar. Starre Solarmodule bestehen üblicherweise aus siliziumbasierten Solarzellen. Die Solarzellen werden hier mechanisch durch das Modul vor Umwelteinflüssen geschützt, z. B. Hagel. Flexible Solarmodule basieren auf organischen Werkstoffen und werden vorzugsweise im mobilen Bereich eingesetzt. Solarmodule selbst werden in Photovoltaikanlagen einzeln oder als Gruppen verschaltet. Sie versorgen entweder stromnetzunabhängige Verbraucher wie z. B. Satelliten oder werden zur Energieeinspeisung in das öffentliche Stromnetz genutzt. Die Gesamtheit aller Module für eine Photovoltaikanlage nennt man Solargenerator oder auch Solarkraftwerk.
(Solarelement = Solarpanel = Solarmodul = Photovoltaikmodul)

## Patentansprüche

1. Photovoltaik-Paneldose, aufweisend ein Gehäuseunterteil (1) sowie ein damit zusammenwirkendes Gehäuseoberteil (2), wobei zwischen dem Gehäuseunterteil (1) und dem Gehäuseoberteil (2) eine Dichtung (3) vorgesehen ist sowie zumindest ein Anschlussstecker (4) für eine Anschlussleitung (5) und im Inneren der Photovoltaik-Paneldose ein Kontaktträger (6) mit Kontakten vorhanden sind, wobei die Photovoltaik-Paneldose ein Kühlblech (100) aufweist, **dadurch gekennzeichnet, dass** eine wärmeleitende Isolierfolie (101) vorgesehen ist, die zwischen zumindest einen Kontakt des Kontaktträgers (6) und dem Kühlblech (100) und / oder einem elektrischen Leiter der Anschlussleitung (5) angeordnet ist.

2. Photovoltaik-Paneldose nach Anspruch 1, **dadurch gekennzeichnet, dass** in dem Gehäuseunterteil (1) und/oder dem Gehäuseoberteil (2) zumindest eine Membran (102) angeordnet ist.

3. Photovoltaik-Paneldose nach Anspruch 2, **dadurch gekennzeichnet, dass** über der Membran (102) nach außen hin eine Abdeckung (103) angeordnet ist.

4. Photovoltaik-Paneldose nach Anspruch 2 oder 3, **dadurch gekennzeichnet, dass** das Gehäuseunterteil (1) und/oder das Gehäuseoberteil (2) um den Bereich der Membran (102) herum eine Abschrägung (104) aufweist.

## Claims

1. Photovoltaic junction box, having a housing lower part (1) and a housing upper part (2) which interacts with the said housing lower part, wherein a seal (3) is provided between the housing lower part (1) and the housing upper part (2) and there is at least one connection plug (4) for a connection line (5) and, in the interior of the photovoltaic junction box, a contact carrier (6) with contacts, wherein the photovoltaic junction box has a cooling plate (100), **characterized in that** a thermally conductive insulating film (101), which is arranged between at least one contact of the contact carrier (6) and the cooling plate (100) and/or an electrical conductor of the connection line (5), is provided.

2. Photovoltaic junction box according to Claim 1, **characterized in that** at least one membrane (102) is arranged in the housing lower part (1) and/or the housing upper part (2).

3. Photovoltaic junction box according to Claim 2, **characterized in that** a cover (103) is arranged over the membrane (102) towards the outside.

4. Photovoltaic junction box according to Claim 2 or 3, **characterized in that** the housing lower part (1) and/or the housing upper part (2) has a bevelled portion (104) around the region of the membrane (102).

## Revendications

1. Boîtier de jonction photovoltaïque, comprenant une partie inférieure de boîtier (1) ainsi qu'une partie supérieure de boîtier (2) qui coopère avec celle-ci, une garniture d'étanchéité (3) se trouvant entre la partie inférieure de boîtier (1) et la partie supérieure de boîtier (2) et au moins une fiche de raccordement (4) pour un câble de raccordement (5) étant présente, ainsi qu'un porte-contacts (6) muni de contacts à l'intérieur du boîtier de jonction photovoltaïque, le boîtier de jonction photovoltaïque possédant une tôle de refroidissement (100), **caractérisé en ce qu'**un film isolant (101) thermoconducteur est présent, lequel est disposé entre au moins un contact du porte-contacts (6) et la tôle de refroidissement (100) et/ou un conducteur électrique du câble de raccordement (5).

2. Boîtier de jonction photovoltaïque selon la revendication 1, **caractérisé en ce qu'**au moins une membrane (102) est disposée dans la partie inférieure de boîtier (1) et/ou la partie supérieure de boîtier (2).

3. Boîtier de jonction photovoltaïque selon la revendication 2, **caractérisé en ce qu'**un élément de recouvrement (103) est disposé au-dessus de la membrane (102) vers l'extérieur.

4. Boîtier de jonction photovoltaïque selon la revendication 2 ou 3, **caractérisé en ce que** la partie inférieure de boîtier (1) et/ou la partie supérieure de boîtier (2) possède un chanfreinage (104) autour de la zone de la membrane (102).
